# EUROPEAN PATENT APPLICATION

(11) **EP 1 736 446 A1**
(43) Date of publication of application: **27.12.2006**
(21) Application number: 05728815.1
(22) Date of filing: 05.04.2005
(51) Int. Cl.: C03B 18/04

(54) **PROCESS FOR PRODUCING FLOAT SHEET GLASS AND APPARATUS THEREFOR**

(30) Priority: 06.04.2004 JP 2004111947
(71) Applicant: Asahi Glass Company, Limited, Chiyoda-ku, Tokyo 100-8405 (JP)
(72) Inventor: INOUEI, Atsushi; c/o Asahi Glass Company, Limited, Kana gawa; 2300045 (JP); TAKIGUCHI, Tetsushi; c/o Asahi Glass Company,, shi, Kanagawa; 2300045 (JP); IGA, Motoichi; c/o Asahi Glass Company, Limited,, Kanagawa; 2300045 (JP); KAMIHORI, Toru; c/o Asahi Glass Company, Limited,, Kanagawa; 2300045 (JP)
(74) Representative: Müller-Boré & Partner Patentanwälte
(86) International application number: PCT/JP2005/006680
(87) International publication number: WO 2005/097690

(57) **Abstract**

It is an object of the present invention to provide a device for manufacturing float glass, which is capable of not only making the circulation paths for the molten metal compact but also suppressing the occurrence of heat loss.

In a method for manufacturing float glass comprising sucking a molten glass ribbon in a substantially vertical direction along both edges of the molten glass ribbon to form recessed portions on a bath surface, and carrying out the flat glass formation with the edges being flowed into and held by the recessed portions; circulation ducts are used to circulate the molten metal to form the recessed portions, each of the circulation ducts comprising an intake duct and an return duct, and the molten metal is circulated through a path for the return duct after flowing out of the intake duct, the path for the return duct being formed between the intake duct and refractory bricks, the refractory bricks being disposed outside the intake duct so as to cover the intake duct, being spaced from the intake duct by a gap.

## Description

### TECHNICAL FIELD

The present invention relates to a method for manufacturing flat glass and a device therefor, in particular, a method for manufacturing flat glass by the float process and a device therefor, which hold both edges of a molten glass ribbon supplied on a molten metal bath surface.

### BACKGROUND ART

A device for manufacturing flat glass by the float process is a device, wherein molten glass is continuously supplied on molten metal, such as molten tin, contained in a vessel, the supplied molten glass is caused to float and move forward on the molten tin, and a glass ribbon comprising the molten glass, which has achieved the equilibrium thickness or is about to achieve the equilibrium thickness at that time, is pulled toward the outlet of the molten tin bath, i.e., a lehr (downstream annealing zone) disposed adjacent the outlet of the molten tin bath to manufacture ribbon-shaped flat glass having a constant width. In such a device for manufacturing flat glass by the float process, the molten glass ribbon, which has achieved the equilibrium thickness or is about to achieve the equilibrium thickness on the molten tin, not only is pulled downstream but also has upper sides of both edge portions stretched in the width direction thereof and over a certain length by rotating top rollers, with the result with flat glass is manufactured to have a smaller thickness than the equilibrium thickness.

The device for manufacturing flat glass by use of such top rollers has a problem in that undulations are caused on a glass surface during the stretching operation by the top rollers. From this point of view, there has been proposed a device for manufacturing flat glass without using such top rollers, wherein the bath level of the molten tin in the vicinity of both edges of a molten glass ribbon in its width direction is set to be lower or higher than the bath level of the molten tin around both edges to hold both edges in order to prevent the molten glass ribbon from narrowing or spreading in the width direction (e.g., Patent Document 1).

In this proposed device for manufacturing flat glass, gutter-like bodies are disposed under the molten glass ribbon flowing on the molten tin in the vessel, and the molten tin is sucked from inlets formed on the top ends of the gutter-like bodies, with the result that both edges of the molten glass are held by the recessed portions formed on the bath surface by this suction.

As the device for sucking the molten tin from the inlets of the gutter-like bodies and flowing the molten tin, linear motors, which can drive the molten tin without contact with the molten tin, are utilized. The linear motors are mounted to intake ducts, which are connected to the gutter-like bodies and extend outside the vessel. The respective intake ducts are connected to respective return ducts, by which the molten tins flowed by the linear motors are returned into the vessel. Accordingly, when the linear motors are energized, a driving force (electromagnetic force) is applied to the molten tin in each of the intake ducts, and the molten tin from the intake ducts to the return ducts with the result that the molten tin in the vessel is sucked form the inlets of the gutter-like bodies to form the recessed portions on the bath surface of the molten tin for holding both edges.

It is sufficient that each of the gutter-like bodies, the intake ducts and the return ducts comprises a material less-reactive or unreactive to the molten tin. Examples of such a material include alumina, sillimanite, brick such as clay brick, and carbon. When the device for flowing the molten tin comprises linear motors, carbon or brick, which is a non-magnetic material, has been utilized to allow an electromagnetic force to be applied to the molten tin.

Patent Document 1: JP-A-2000-7359

### DISCLOSURE OF INVENTION

### PROBLEMS THAT THE INVENTION IS TO SOLVE

However, the conventional device for manufacturing glass, which utilizes linear motors, has caused a problem in that the circulation paths for the molten tin increase in size since the intake ducts and the return ducts for flowing the molten tin are made of brick or carbon. The conventional device has also caused a problem in that the load of heaters for heating the molten tin increases since an increase in size causes an increase in heat-radiating areas to make heat loss larger.

The present invention has proposed in consideration of such circumstances. It is an object of the present invention to provide a device for manufacturing float glass, which is capable of not only making the circulation paths for the molten metal compact but also suppressing the occurrence of heat loss at the circulation paths.

### MEANS FOR SOLVING THE PROBLEM

In order to attain the above-mentioned object, the present invention provides a method for manufacturing float glass, comprising continuously supplying molten glass on a bath surface of molten metal to form a molten glass ribbon, causing the molten glass ribbon to move forward to form flat glass having a target thickness, sucking the molten metal in a substantially vertical direction along both edges of the molten glass ribbon to form recessed portions on the bath surface, and carrying out the flat glass formation with the edges being flowed into and held by the recessed portions; the method further comprising using circulation paths for circulating the molten metal to form the recessed portions, each of the circulation paths comprising an intake duct and an return duct; and circulating the molten metal through a path for the return duct after flowing out of the intake duct, the path for the return duct being formed between the intake duct and refractory bricks, the refractory bricks being disposed outside the intake duct so as to cover the intake duct, being spaced from the intake duct by a gap.

In order to attain the above-mentioned object, the present invention also provides a device for manufacturing float glass, comprising gutter-like bodies disposed so as to be immersed in molten metal in a vessel along both edges of a molten glass ribbon in a width direction of the molten glass ribbon, each of the gutter-like bodies comprising an inlet for sucking the molten metal in a substantially vertical direction; intake ducts connected to outlets of the gutter-like bodies and extending outside the vessel; return ducts for returning the molten metal into the vessel after the molten metal flows out of the intake ducts; and linear motors disposed along the portion of the intake ducts to circulate the molten metal into the vessel from the outlets of the gutter-like bodies through the intake ducts and the return ducts, so that the bath surface level of the molten metal in the vicinity of each of both edges is controlled to be made lower than the bath surface level around each of the edges; wherein a path forming each of the return ducts is formed between each of the intake ducts and refractory bricks, the refractory bricks being disposed outside the intake duct so as to cover the intake duct by a gap.

In accordance with the present invention, each of the intake ducts is covered with the refractory bricks, and the gap between the refractory bricks and each of the intake ducts is utilized as the path for each of the return ducts. By this arrangement, the circulation paths for the molten metal, which comprise the intake ducts and the return ducts, have dual duct structures formed by the intake ducts and the refractory bricks, with the result that the circulation paths are made compact in comparison with the conventional circulation paths. Thus, the heat radiating area of the circulation paths can be decreased to minimize heat loss at the circulation paths by the effect of decreasing heat radiation.

In a preferred embodiment of the present invention, linear motors are used to suck the molten metal in the substantially vertical direction alone both edges of the molten glass ribbon to form the recessed portions on the bath surface, with the result that the bath surface level of the molten metal in the vicinity of each of both edges is controlled to be made lower than the bath surface level around each of the edges.

In accordance with the present invention, the linear motors is disposed along the intake ducts to drive the molten metal to circulate the molten metal through the paths for the return ducts after flowing out of each of the intake ducts, each of the paths for the return ducts being formed between each of the intake ducts and the refractory bricks, the refractory bricks being disposed outside each of the intake ducts so as to cover each of the intake ducts, being spaced from each of the intake ducts by the gap; the molten metal is sucked in the substantially vertical direction along both edges of the molten glass ribbon to form the recessed portions on the bath surface; and the flat glass formation is carried out with the edges being flowed into and held by the recessed portions.

In a preferred embodiment of the present invention, the intake ducts and the return ducts are disposed in a substantially orthogonal direction to a forward direction of the molten glass ribbon. By this arrangement, the molten tin can be smoothly flowed through the intake ducts and the return ducts, and the circulation paths are simplified since the molten tin, which is flowed through the intake ducts and the return ducts by the linear motors, is not subjected to excessive flow resistance.

In another preferred embodiment of the present invention, the gutter-like bodies are disposed in a high temperature zone of the molten glass ribbon, and top rollers are disposed in a forming zone of the molten glass ribbon to hold upper sides of both edges of the molten glass ribbon. As a result, it is possible to simplify the equipment and to lower equipment costs.

In another preferred embodiment of the present invention, the gutter-like bodies have introduction holes formed therein so as to communicate the inlets, the introduction holes being formed at shorter pitches and/or formed so as to have larger opening areas as the introduction holes are away from the intake ducts in the forward direction of the molten glass ribbon. By this arrangement, the flow volume of the molten metal flowing into the introduction holes can be kept constant along the forward direction of the molten glass ribbon.

### EFFECT OF THE INVENTION

In accordance with the float glass manufacturing device of the present invention, the carbon intake ducts are covered with the refractory bricks, and the gap between the refractory bricks and each of the intake ducts is utilized as the path for each of the return ducts, with the result that the circulation paths for the molten metal can be made compact to suppress minimize the heat loss at the circulation paths as well.

### BRIEF DESCRIPTION OF DRAWINGS

Fig. 1 is a perspective view showing essential portions of the device for manufacturing flat glass for a FPD, such as a liquid crystal display, according to an embodiment of the present invention;
Fig. 2 is a plan view showing a gutter-like body and a circulation path for molten glass, which are disposed in the device shown in Fig. 1;
Figs. 3 a and 3 b are a cross-sectional view of the gutter-like body taken along line 3-3 of Fig. 2 and a cross-sectional view of the gutter-like body taken along line 6-6 of Fig. 2;
Fig. 4 is a cross-sectional view of the gutter-like body taken along line 4-4 of Fig. 2;
Fig. 5 is a cross-sectional view of the gutter-like body taken along line 5-5 of Fig. 2; and
Fig. 6 is a plan view of a device for manufacturing flat glass, wherein top rollers are disposed in a high-temperature zone of a molten glass ribbon.

### EXPLANATION OF THE REFERENCE NUMERALS

10: device for manufacturing float glass, 12: gutter-like body, 14: vessel, 16: molten tin, 18: supply port, 20: molten glass ribbon, 22: edge, 24: bath surface, 26: recessed portion, 28: inlet, 30: intake duct, 32: brick, 34: gap (flow path), 36: linear motor, 42: introduction hole, 44: outlet, 46: top rollers

### BEST MODE FOR CARRYING OUT THE INVENTION

Now, the device for manufacturing float glass, according to a preferred embodiment of the present invention will be described in detail, referring to the accompanying drawings.

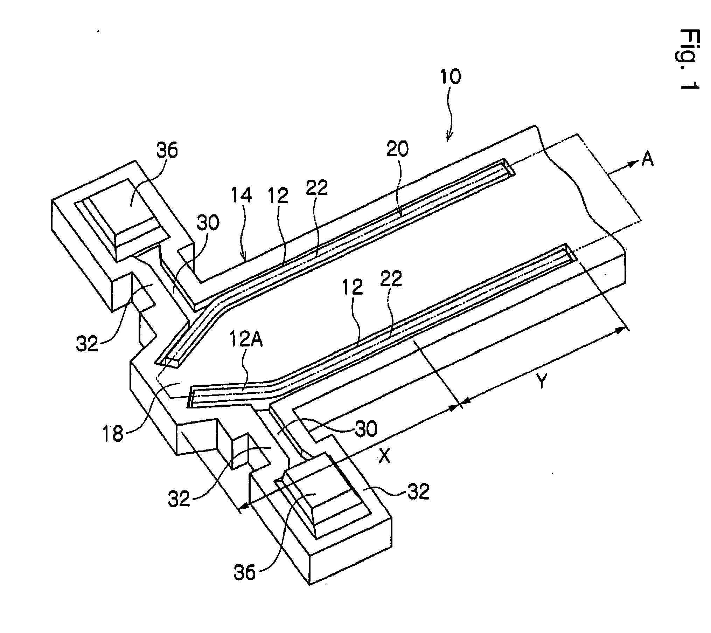

Fig. 1 is a perspective view of essential portions of a float glass manufacturing device 10 for manufacturing flat glass, according to the present invention. The flat glass for a FPD (Flat Panel Display), such as a liquid crystal display, is generally required to have a thickness of from about 0.6 to 1.0 mm and is also required to have flatness with a high degree of accuracy. The flat glass manufacturing device according to the present invention comprises the float glass manufacturing device 10, which utilizes gutter-like bodies 12 and is configured as a non-contact system. In accordance with the float glass manufacturing device 10, it is possible to satisfy the thickness required as flat glass for a FPD and to improve flatness.

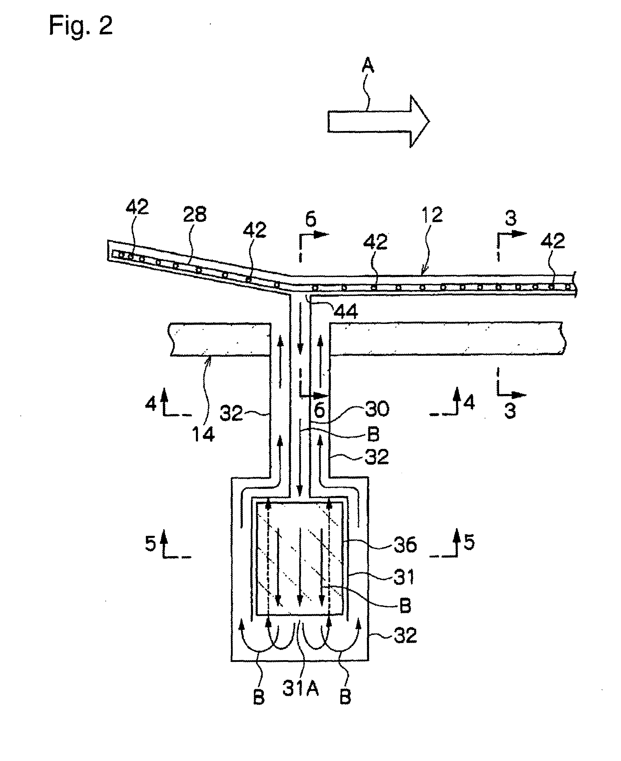

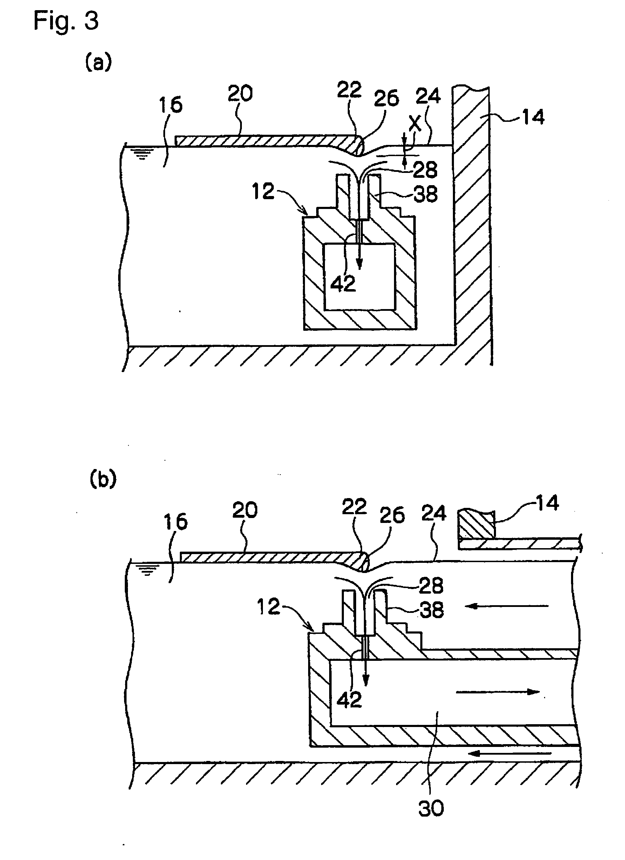

The gutter-like bodies 12 of the float glass manufacturing device 10 are disposed under both edges of a molten glass ribbon in a vessel 14 and are disposed so as to be immersed in molten tin (molten metal) 16 contained in the vessel 14 as shown in Fig. 3. The gutter-like bodies 12 are disposed along both edges 22 and 22 of the molten glass ribbon 20, which is continuously supplied into a supply port 18 of the vessel 14 from a glass melting furnace to flow into the vessel 14 through the supply port 18 as shown in Fig. 1. The molten glass ribbon 20 moves forward on the surface of the molten tin 16, being pulled toward indicated by the arrow A (toward a lehr) in each of Fig. 1 and Fig. 2. Both edges 22 and 22 are held by recessed portions 26 of a bath surface 24 (see Fig. 3) in a high temperature zone x (at a temperature of about 930 to 1,300°C) and a forming zone (at a temperature of about 800 to about 930°C) of the molten glass ribbon in the vessel 14. The molten glass ribbon 20, which has both edges 22 held by the recessed portions 26, is subjected to thickness and width adjustment during the forward movement toward indicated by the arrow A, and then is forwarded, in a stable way, to a later stage in the vessel to be cooled before being taking out of the vessel 14 to be forwarded to the lehr. The glass in this embodiment comprises soda lime glass, and the molten tin 16 is heated by an electric heater. The vessel 14 is build of refractory bricks.

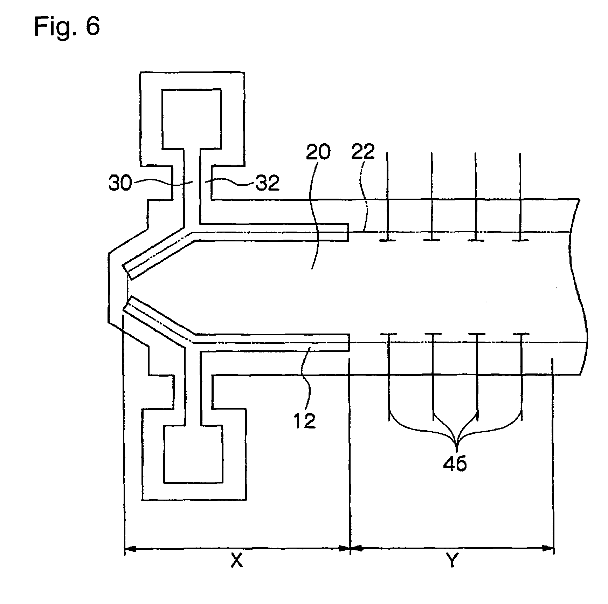

As shown in Fig. 6, the gutter-like bodies 12 may be disposed in the high temperature zone X of the molten glass ribbon, and top rollers 46 may be disposed in the forming zone Y of the molten glass ribbon in order to hold top sides of both edge portions of the molten glass ribbon. When the top rollers 46 are disposed only in the glass forming zone Y, it is possible to reduce the occurrence of undulation on a glass surface by provision of the top rollers 46, to simplify the equipment and to lower equipment costs in comparison with a case where the top rollers are disposed in the high temperature zone x of the molten tin as well.

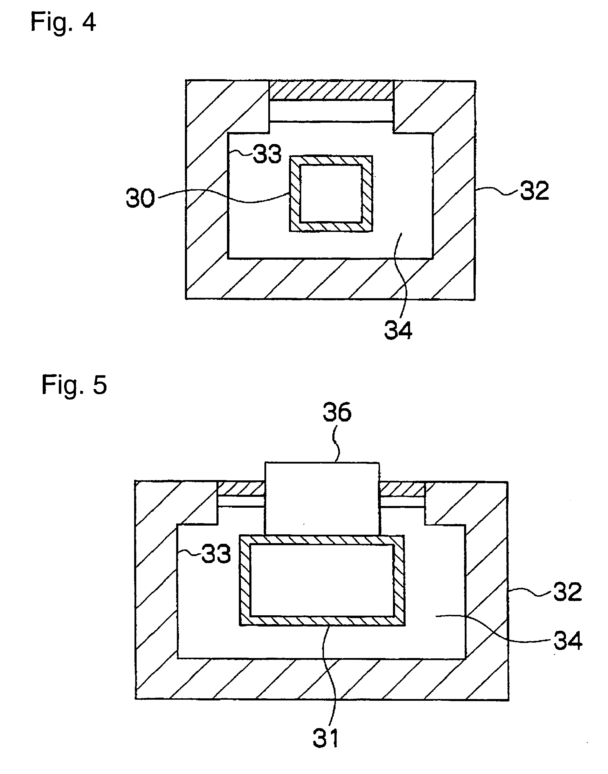

As shown in Fig. 2 and Fig. 3, each of the gutter-like bodies 12 has an inlet 28 formed therein along the corresponding edge 22 of the molten glass ribbon to suck the molten tin 16 in a substantially vertical direction, and each of the gutter-like bodies also has an outlet 44 connected to an intake duct 30 made of carbon. The intake duct 30 extends outside the vessel 14 and is covered with bricks (refractory bricks) 32, which form a return duct. It should be noted that the bricks are mounted to the inner side of an iron casing (not shown). By this arrangement, it is possible to prevent the molten tin from leaking out of a gap between adjacent bricks or the like. The carbon intake duct has an upper portion fixed to the bricks in spots. As shown in Fig. 4 and Fig. 5, the gap 34 between the inner wall surface 33 of the bricks 32 and the intake duct 30 is utilized as the path for the return duct. Although the return duct is formed in an angular and annular cross-sectional shape by being formed from the gap 30 around the entire periphery of the intake duct 30 in this embodiment, the cross-sectional shape of the gap 34 is not limited to such an angular and annular cross-sectional shape as long as the intake duct 30 and the return duct have a dual structure wherein the intake duct is substantially disposed in the return duct. Each of the intake ducts 30 has a linear motor 36 mounted to a top surface of an end portion 31 as shown in Fig. 1 and Fig. 2.

When the linear motor 36 applies a driving force to the molten tin 16 in the intake duct 30 in the direction indicated by an arrow B in Fig. 2, the molten tin 16 in the intake duct 30 is flowed from the end opening 31A into the gap 34 formed by the bricks 32, and the molten tin 16 in the gap 34 formed by the bricks 32 is returned to the vessel 14. In synchronization with this operation, the molten tin 16 in the vessel 14 enters the inlet 28 of the gutter-like body 12 and flows into the intake duct 30 through the gutter-like body 12. Thus, the molten tin 16 is circulated in a circulation path, which comprises the intake duct 30 and the return duct formed between the intake duct 30 and the bricks 32, the bricks 32 being disposed outside the intake duct 30 so as to cover the intake duct 30, being spaced from the intake duct by a certain distance.

Since the circulation of the molten tin 16 causes the molten tin 16 to flow toward a direction substantially vertical to the bath surface 24 and toward the bottom of the vessel 14 as shown in Fig. 3, a negative pressure is created under each of the edges 22 of the molten glass ribbon 20. By this negative pressure, the bath surface level of the molten tin 16 in the vicinity of each of the edges 22 is made lower than the bath surface level around each of the edges. Both edges 22 of the molten glass ribbon 20 flow into the recessed portions 26 defined by the lowered portions of the bath surface 24. In this way, both edges 22 of the molten glass ribbon 20 are held by the recessed portions 26. Accordingly, it is possible to make the width of the molten glass ribbon 20 wider and keep the width wide, which is capable of manufacturing flat glass for a FPD having a smaller thickness than the equilibrium thickness.

The gutter-like bodies 12 may comprise a material less-reactive or unreactive to the molten tin 16, examples of which include alumina, sillimanite, brick such as a clay brick, and carbon. In this preferred embodiment, the gutter-like bodies are made of carbon in terms of good machinability.

The linear motors 36 are advantageous in that it is possible to directly drive the molten tin 16 without contact with the molten tin, and that it is easy to control the flow volume and flow direction of the molten tin. The linear motors 36 have coils wound on a comb-like primary iron core, and a three-phase a.c. voltage is applied to the coils to successively excite the coils, generating a magnetic field traveling in a certain direction. Each of the linear motors 36 is disposed on the top surface of the end portion 31 of each of the intake ducts 30, such that each of the linear motors can apply a driving force (tractive force) to the molten tin 16 in the end portion 31 of each of the intake ducts 30. By this arrangement, the molten tin 16 in the intake ducts 30 and the gap defined by the bricks 32 is circulated as indicated by the arrows B by the driving force of the linear motors 36. Since each of the linear motors 36 is disposed on the top surface of the end portion 31 of each of the intake ducts 30, it is possible to simplify the equipment, make the equipment compact and to lower initial costs and running costs.

In the float glass manufacturing device 10 constructed as stated above, each of the intake ducts 30 and each of the end portions 31 of the intake ducts are configured so as to have the linear motor 36 disposed on the end portion and to be covered with the bricks 32 in order to cause the gap 34 between the bricks 32 and the intake duct 30 to serve as the path for the return duct, although each of the intake ducts and each of the end portions of the intake ducts are made of carbon which is not magnetic material. By this arrangement, the circulation paths for the molten metal, which comprise the intake ducts and the return ducts, have dual duct structures formed by the intake ducts 30 and the bricks 32, with the result that the circulation paths are made compact to minimize heat loss at the circulation paths.

As shown in Fig. 3, the inlet 28 of each of the gutter-like bodies 12 has an open end 38 formed thereat so as to project therefrom, so that the molten tin 16 is flowed into the inlet 28 in a substantially vertical direction along the open end 38.

Each of the gutter-like bodies 12 has introduction holes 42 formed therein so as to communicate with the inlet 28. The introduction holes 42 are formed in a circular shape and are disposed at different pitches in the forward direction A of the molten glass ribbon 20 as shown in Fig. 2. The introduction holes 42 are not limited to be formed in a circular shape and may be formed in a rectangular shape. Specifically, the introduction holes 42 are disposed at shorter pitches as the introduction holes 42 are away from the intake ducts 30. The reason that introduction holes 42 closer to the intake ducts 30 have larger incoming flow volumes and larger flow rates since the molten tin 16, which has flowed into the intake ducts 30 from the introduction holes 42, moves forward through the intake ducts 30 to portions with the linear motors 36 disposed thereon. By varying the pitches of the introduction holes 42 as shown in Fig. 2, the flow volumes of the molten tin 16 into the introduction holes 42 can be kept constant along the forward direction of the molten glass ribbon 20. Thus, even when the gutter-like bodies 12 have a long length along the edges 22, the difference x on the bath surface level in the vicinity of the edges 22 (see Fig. 3) can be controlled to be kept constant along the forward direction of the molten glass ribbon 20. Instead of having different pitches, the introduction holes 42 may have larger opening areas as the introduction holes are away from the intake ducts 30. The pitches and the opening areas may be varied.

Although plural intake ducts 30 may be disposed in the vicinity of each of the edges 22 in order to controllably keep the level difference x on the bath surface constant, the equipment is made accordingly larger, and heat loss is more likely to be caused.

In accordance with the preferred embodiment of the present invention, the intake ducts 30 and the return ducts (the gaps 34) are disposed in a substantially orthogonal direction to the forward direction of the molten glass ribbon 20 on both sides of the molten glass ribbon. Accordingly, the molten tin 16, which is flowed in the intake ducts 30 and the return ducts (the gaps 34) by the linear motors 36, is not subjected to excessive flow resistance, with the result that the molten tin 16 can be smoothly flowed through the intake ducts 30 and the return ducts (the gaps 34).

### INDUSTRIAL APPLICABILITY

The present invention is applicable to float glass manufacturing for thin flat glass having undulations minimized and having high flatness.

The entire disclosure of Japanese Patent Application No. 2004-111947 filed on April 6, 2004 including specification, claims, drawings and summary is incorporated herein by reference in its entirety.

## Claims

1. A method for manufacturing float glass, comprising continuously supplying molten glass on a bath surface of molten metal to form a molten glass ribbon, causing the molten glass ribbon to move forward to form flat glass having a target thickness, sucking the molten metal in a substantially vertical direction along both edges of the molten glass ribbon to form recessed portions on the bath surface, and carrying out the flat glass formation with the edges being flowed into and held by the recessed portions;
the method further comprising using circulation paths for circulating the molten metal to form the recessed portions, each of the circulation paths comprising an intake duct and an return duct; and circulating the molten metal through a path for the return duct after flowing out of the intake duct, the path for the return duct being formed between the intake duct and refractory bricks, the refractory bricks being disposed outside the intake duct so as to cover the intake duct, being spaced from the intake duct by a gap.

2. The method according to Claim 1, further comprising utilizing a linear motor disposed along the intake duct to drive the molten metal to circulate the molten metal through the path for the return duct after flowing out of the intake duct, the path for the return duct being formed between the intake duct and the refractory bricks, the refractory bricks being disposed outside the intake duct so as to cover the intake duct, being spaced from the intake duct by the gap; sucking the molten metal in the substantially vertical direction along both edges of the molten glass ribbon to form the recessed portions on the bath surface; and carrying out the flat glass formation with the edges being flowed into and held by the recessed portions.

3. A device for manufacturing float glass, comprising:
gutter-like bodies disposed so as to be immersed in molten metal in a vessel along both edges of a molten glass ribbon in a width direction of the molten glass ribbon, each of the gutter-like bodies comprising an inlet for sucking the molten metal in a substantially vertical direction;
intake ducts connected to outlets of the gutter-like bodies and extending outside the vessel;
return ducts for returning the molten metal into the vessel after the molten metal flows out of the intake ducts; and
linear motors disposed along portions of the intake ducts to circulate the molten metal into the vessel from the outlets of the gutter-like bodies through the intake ducts and the return ducts, so that a bath surface level of the molten metal in the vicinity of each of both edges is controlled to be made lower than the bath surface level around each of the edges;
wherein a path forming each of the return ducts is formed between each of the intake ducts and refractory bricks, the refractory bricks being disposed outside each of the intake ducts so as to cover each of the intake ducts by a gap.

4. The device according to Claim 3, wherein the intake ducts and the return ducts are disposed in a substantially orthogonal direction to a forward direction of the molten glass ribbon.

5. The device according to Claim 3 or 4, wherein the gutter-like bodies are disposed in a high temperature zone of the molten glass ribbon, and wherein top rollers are disposed in a forming zone of the molten glass ribbon to hold upper sides of both edges of the molten glass ribbon.

6. The device according to any one of Claims 3 to 5, wherein the gutter-like bodies have introduction holes formed therein so as to communicate the inlets, the introduction holes being formed at shorter pitches and/or formed so as to have larger opening areas as the introduction holes are away from the intake ducts in the forward direction of the molten glass ribbon.
